# EUROPEAN PATENT SPECIFICATION

(11) **EP 3 267 854 B1**
(45) Date of publication and mention of the grant of the patent: **17.04.2019**
(21) Application number: 15720465.2
(22) Date of filing: 02.04.2015
(51) Int. Cl.: A47J 31/30, A47J 31/06

(54) **COFFEE-MAKER ASSEMBLY AND ADAPTER BODY**
KAFFEEAUTOMATANORDNUNG UND ADAPTERKÖRPER
ENSEMBLE MACHINE À CAFÉ ET CORPS D'ADAPTATEUR

(30) Priority: 10.03.2015 IT BG20150015
(43) Date of publication of application: 17.01.2018
(73) Proprietor: Giadagui S.r.l., 20154 Milano (IT)
(72) Inventor: MANAZZA, Dario, I-20154 Milano (IT); BARCHI, Luca, I-20154 Milano (IT); CORTI, Guido, I-20154 Milano (IT)
(74) Representative: Gualeni, Nadia
(86) International application number: PCT/IB2015/052441
(87) International publication number: WO 2016/142751

(56) References cited:
- EP-A1- 0 838 186
- EP-A1- 1 582 127
- DE-A1-102007 038 699
- DE-U1-202007 002 064
- US-A1- 2006 249 035

## Description

This invention relates to a coffee-maker assembly.

Despite the growing diffusion of electrical machines for the preparation of infused beverages, the traditional coffee-maker (the so-called "moka" home espresso coffee machine), which is placed on a heating burner or on an electric plate heater to create a beverage, remains the most widely used mode for the infusion of coffee at home. The document EP 0 838 186 A1 discloses a "moka" espresso coffee machine.

However, since the loose coffee powder used for this purpose is subject to a progressive deterioration in the air, mainly due to an oxidation of its aromatic substances and fats, the need is increasingly felt to be able to combine the simplicity of use of single-portion pods, for example of the type sealed in a controlled atmosphere, with the high diffusion of traditional coffee-makers.

In fact, there would be great appreciation for the option of being able to use pods also in moka coffee-makers by adapting them to infuse a quality beverage that is not inferior to a corresponding beverage obtained from loose powder.

This invention places into the preceding context by proposing to provide an assembly and an adapter body of high structural simplicity, capable of ensuring that pods containing aromatic substances can be used in moka coffee-makers, in a system with high simplicity of use.

This objective is achieved by means of a coffee-maker assembly according to claim 1. The claims depending therefrom show variants of preferred embodiments.

The object of this invention will now be described in detail, with the help of the attached tables, wherein:

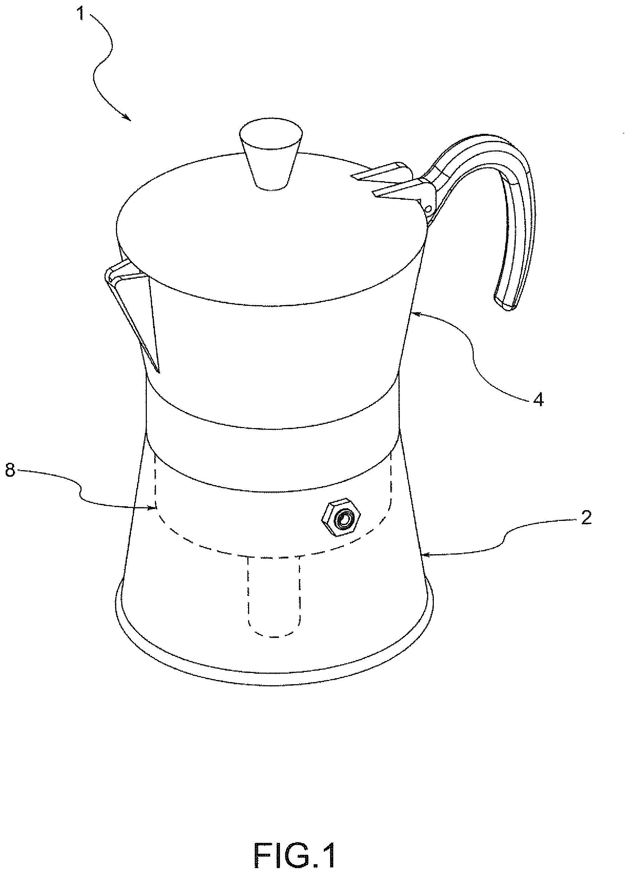

- Figures 1, 2 and 3 respectively show a perspective view from above, a longitudinal section and an exploded perspective view of an assembly object of this invention according to a variant, in accordance with a possible mode of use, herein a pod is inserted;
- Figures 4, 6 and Figure 5 are respectively longitudinal sections and an exploded view of the assembly of Figure 1, but according to a different mode of use of the adapter body.

In reference to the above figures, reference number 1 identifies, in its entirety, a coffee-maker assembly comprising a coffee-maker and adapter body 10.

In particular, as for example shown schematically in the figures, the coffee-maker is a moka coffee-maker, for example of the type for domestic use.

The coffee-maker comprises a boiler 2 for an infuser liquid (preferably water), a beverage container 4 defining a collection chamber 6 for a beverage infused by means of said heated liquid, and an infusion funnel 8 that delimits part of an infusion chamber 14 suitable to house at least one pod 16 permeable to the infuser liquid and containing an aromatic substance 18 (for example coffee powder) for the infused beverage.

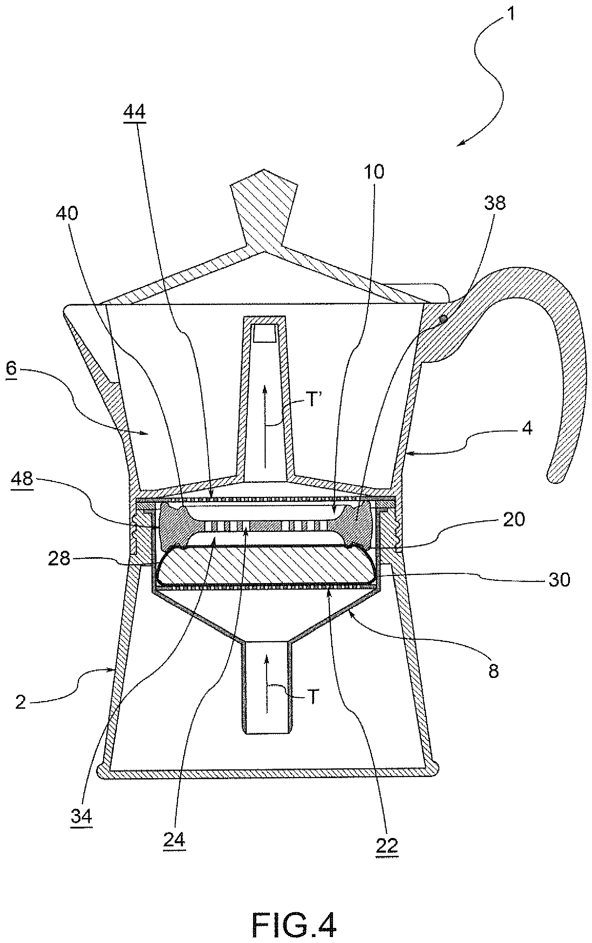

It follows that, once the infuser liquid inside the boiler has reached a sufficiently high pressure for heating, the liquid will be pushed - in the transit direction T (Figure 4) - towards the infusion chamber where the pod is at least partially housed. Following a certain time of contact between the aromatic substance and said heated liquid, the infusion of the infused beverage will take place. After which, the infused beverage will proceed from the infusion chamber - in the transit direction T' - towards the collection chamber 6.

The beverage container 4 and the infusion funnel 8 comprise perforated walls 12,42 for the passage of the said liquid and said beverage.

In the embodiment shown, the perforated wall 12 of the infusion funnel 8 delimits a bottom of the infusion chamber 14.

According to a further embodiment, the perforated wall 42 of the beverage container 4 superiorly delimits the infusion chamber 14, in particular at the other end with respect to perforated wall 12.

Preferably, the perforated walls 12,42 are spaced from each other along at least one transit direction T, T' of the liquid or of the beverage.

According to a variant embodiment, the infusion funnel 8 comprises a substantially tubular wall 30, connected and that extends from the perforated wall 12 to laterally delimit the infusion chamber 14.

The adapter body 10 for the above pod is made of an elastomeric material. Preferably, the body 10 is integrally formed from said material, in one piece, for example obtained through a moulding from said material.

According to a preferred variant, this material comprises or consists of a silicone or of a thermoplastic polymer.

Optionally, at least one antibacterial agent may be distributed within the elastomeric material, for example in a percentage equal to or greater than 0.5% by weight (wt%) with respect to the weight of the above-mentioned material.

According to an embodiment, the antibacterial agent is or comprises zinc powder. For example, the zinc powder may be present in a proportion of about 0.7-1.5 wt%, specifically about 1 wt%.

The adapter body 10 identifies one or more internal passages 24 and a pair of contact perimeters 20,26 that surround the perforations 22, 44 of perforated walls 12, 42 and that are spaced through the thickness of said body 10.

A contact perimeter 20, 26 rests sealingly on a perforated wall 12, 42 so as to convey the infuser liquid or infused beverage through the internal passage 24 or the plurality of them.

In other words, by virtue of the above-mentioned seal between the contact perimeter and the perforated wall, the fluid - whether infuser liquid or infused beverage - is forced to cross the at least one internal passage 24, and is prevented from infiltrating along alternative paths that would be detrimental to the taste and/or creaminess of the infused beverage.

Advantageously, the other contact perimeter, 26 or 20, of that body 10 is configured so as to form a hydraulic seal on the pod 16.

It follows that, according to this variant, whatever the mode of use, the adapter body lies in abutment on one side with a perforated wall, and on the other with the pod, creating a bilateral seal by virtue of its contact perimeters.

In other words, each contact perimeter 20, 26 is preferably suitable to create seals on the perforated walls 12, 42 and on the pod 16, so that the adapter body 10 is insertable between the beverage container 4 and the infusion funnel 8 in any direction, vertically above or below of said pod 16.

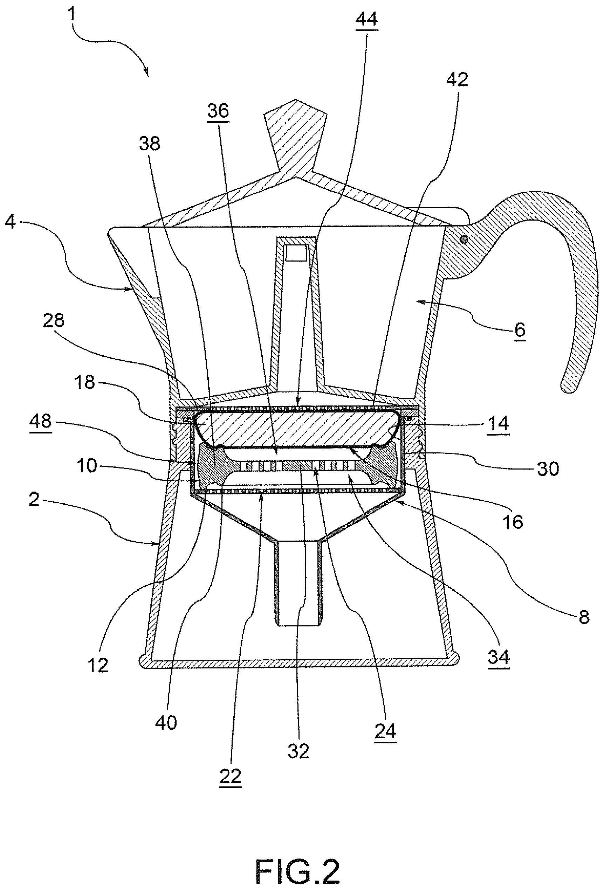

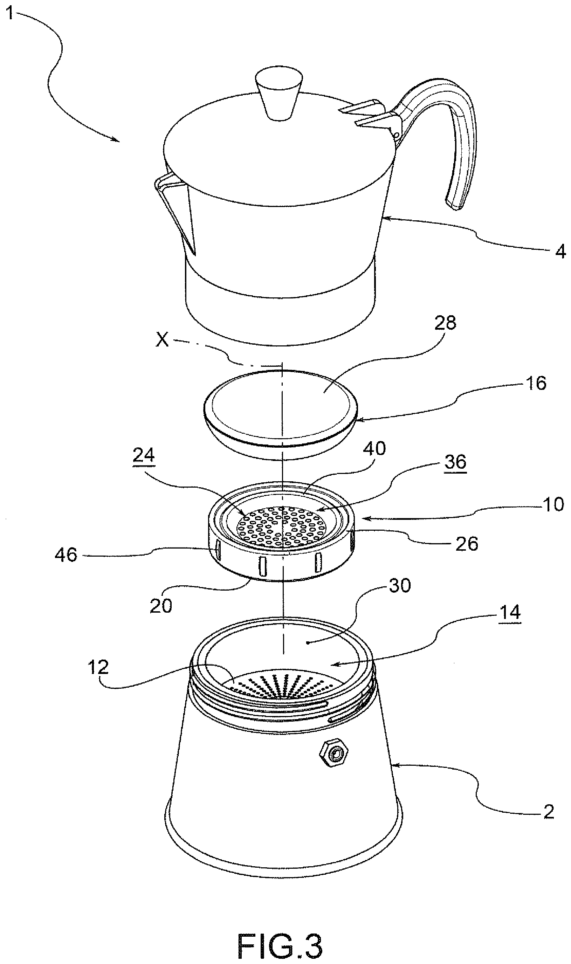

More specifically, the embodiment of Figures 2 and 3 shows a first mode of use of this assembly, wherein the adapter body is in contact with the perforated wall 12 of the infusion funnel 8, and where the pod 16 rests vertically above the adapter body.

According to this variant, it should be noted that the infuser liquid enters into the pod wetting it and, when the pressure generated by the boiler exceeds the resistance of the aromatic substance, passes into the beverage container. In this circumstance, the pressures inside the infusion chamber are not much higher than those of a traditional coffee-maker without the adapter body.

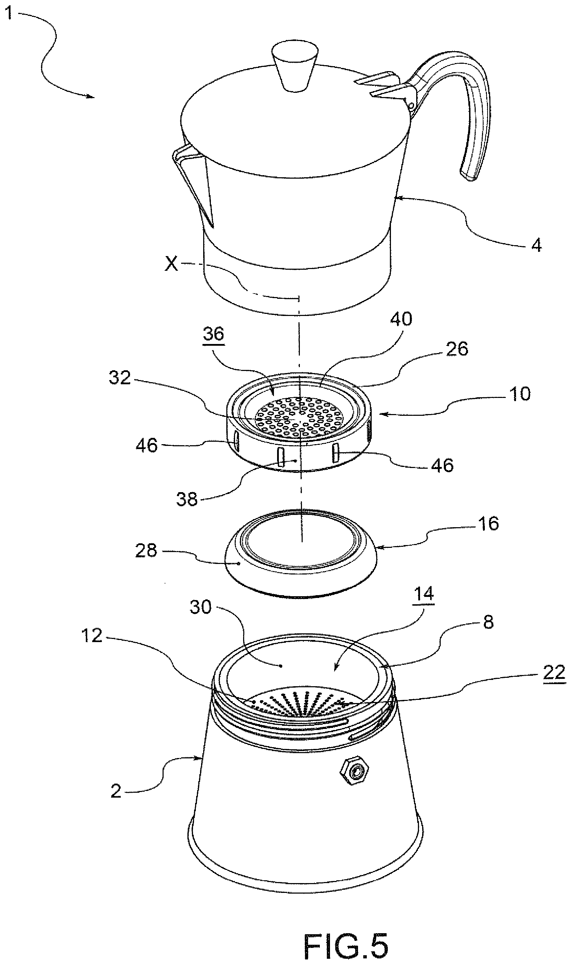

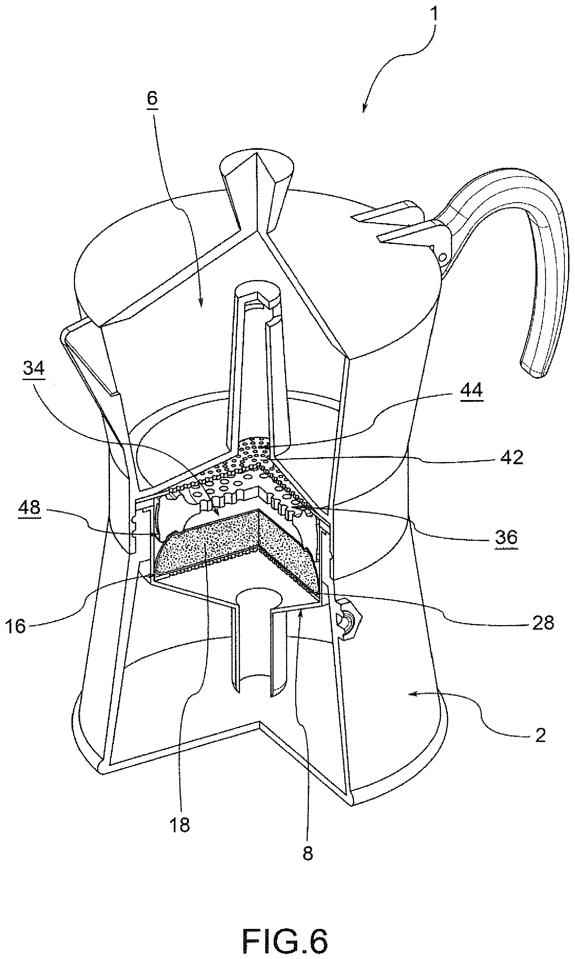

In contrast, the embodiment of Figures 4, 5 and 6 show a second mode of use, wherein the pod is accommodated in the infusion chamber so as to rest on the perforated wall 12 of the infusion funnel 8, while the adapter body rests on the pod and lies in abutment against the perforated wall 42 of the beverage container 4.

According to this mode of use, the hydraulic seal of the pod with respect to the perforated wall of the funnel is better as the aromatic substance, swelling into the pod during the pre-infusion, pushes the adapter body toward the perforated wall 42, and optionally against a gasket surrounding, said wall. The result is higher pressures and infusion times, although the beverage is less creamy probably because the internal passages 24 break the cream formed before it arrives in the beverage container.

According to initial tests, carried out on coffee powder with a particle size of about 600 micrometres in diameter (calculated on an equivalent sphere), the mode of use according to Figures 2 and 3 allows extracting about 10% more caffeine than the usage variant according to Figures 4 to 6.

According to not shown embodiments, two or more pods may superimposed inside of the infusion chamber, wherein the adapter body may be arranged below the lower pod or above the upper pod.

According to a particularly advantageous variant, one or both contact perimeters 20, 26 have a surface hardness in the range of 40-70 ShoreA to create the above-mentioned seal on the perforated wall 12, 42, and optionally to prevent damage of a permeable wall 28 of said pod 16.

Preferably, this range could be between 40-60 or 45-55 ShoreA and, for example, could be substantially 50 ShoreA.

This range was carefully chosen because, for hardnesses below 40 ShoreA, the compressions in the infusion chamber are such as to cause a failure of the adapter body. On the contrary, for hardness values greater than 70 ShoreA, this body has a hardness so high as not to be able to seal, and in some cases such as to cause breakage of the pod and leakage of the aromatic substance.

According to a variant, in front of the substantially tubular wall 30 of the funnel 8, the adapter body 10 delimits spacer elements 46 to ensure a free interspace 48 between the adapter body and the substantially tubular wall 30. In this way, regardless of the pressure value inside the infusion chamber, the adapter body always maintains a certain distance with respect to the wall 30.

Preferably, the spacer elements 46 are distributed around the adapter body 10 so as to constitute centring means of the adapter body 10 in the infusion chamber 14.

Purely by way of example, the spacer elements 46 may comprise projections that extend outward from an external surface of the adapter body.

In the variant shown, the spacer elements 46 are equally spaced around the adapter body 10.

According to an advantageous variant, the adapter body 10 comprises a distribution plate 32, preferably made in one piece with elastomeric material, crossed by the internal passages 24. In this way, with respect to the direction transit T, T' of the infuser liquid or the infused beverage, the internal passages 24 communicate preferably upstream with a lower chamber 34 and downstream with an upper chamber 36 of such body 10.

For example, at least one of these chambers 34,36 is configured to accommodate at least part of the pod 16.

According to a further variant, the adapter body 10, or the distribution plate 32, delimits internal passages 24 distributed with a density of about 2-20 passages/cm², preferably 4-10 passages/cm².

According to a preferred variant, the internal passages 24 are substantially circular and have a diameter of between 1-2,5 mm.

According yet another variant, the adapter body 10 comprises a body wall 38 that extends annularly around a central axis X, wherein the contact perimeters 20, 26 are placed in correspondence to the axial ends of such a wall 38.

Preferably, surrounded by at least one contact perimeter 20, 26 (therefore, in the specific case, radially internally with respect to the above-mentioned axis X), the adapter body 10 delimits a secondary contact perimeter 40 suitable to partially wedge itself in the pod 16 to create a supplementary fluidic barrier between such body and such pod.

In other words, the secondary contact perimeter 40 strengthens the seal in correspondence of the pod, since the permeability of the latter may make it difficult to convey the infuser liquid or beverage as indicated above.

For example, the secondary contact perimeter 40 may be partially convex or rounded to prevent lacerations of the pod 16 or its permeable wall 28.

According to a particularly preferred variant, the secondary contact perimeter 40 is partially lowered or undercut with respect to the contact perimeter 20, 26 so that, when the latter is in abutment with the perforated wall 12, 42, the secondary contact perimeter 40 remains spaced from the wall in order not to prevent/obstruct the transit of the infuser liquid or the infused beverage through the perforations 22, 44.

It follows that, according to this embodiment, the fluidic seal towards the perforated walls is ensured by contact perimeters 20, 26 only, while the seal towards the pod is obtained jointly by a contact perimeter 20, 26 and by the respective secondary contact perimeter 40.

According to a preferred embodiment, the thickness of the adapter body 10 is selected in such a way that, by virtue of the elasticity of the elastomeric material, such body 10 elastically works on the pod 16 and the perforated wall 12, 42 to partially compress the aromatic substance 18.

This invention also relates to an adapter body 10 for a pod usable in a coffee-maker assembly 1 according to any of the previous variants.

It follows that the preferred or advantageous embodiments of this body may include any feature among those discussed above.

Such adapter body 10, made of elastomeric material, identifies one or more internal passages 24 and a pair of contact perimeters 20, 26 that surround the perforations 22, 44 of the perforated walls 12, 42 and that are spaced through the thickness of said body 10. Moreover, the contact perimeter 20, 26 is configured to rest sealingly on a perforated wall 12, 42 so as to convey the infuser liquid or infused beverage through the internal passage 24 or the plurality of them.

Innovatively, the above-mentioned assembly and the above-mentioned insert allow brilliantly solving the drawbacks of the prior art.

More precisely, the assembly and the adapter body of this invention are able to allow the use of pods in traditional moka coffee-makers, using a system with high simplicity of use and with all the advantages associated with the use of single-use portions of aromatic substances.

Advantageously, the above-mentioned adapter body is characterized by a low number of components, and is therefore industrially producible in an economical way.

Advantageously, the elastomeric material is able to seal without breaking the material of the pod, as it does not create critical laceration points of the related wrapping material.

Advantageously, the adapter body of this invention is essentially without a direction of insertion into the infusion chamber, in that its shape allows ensuring a seal on both its supporting faces.

In addition to that, advantageously, the adapter body of this invention can be placed upstream or downstream of the aromatic substance, obtaining infused beverages with different characteristics of taste and selectable at will by the users of the assembly.

The indifferent placement with respect to the pod further simplifies the use of the adapter body.

Advantageously, the adapter body of this invention is designed so as to be easily removable from infusion chambers of any size. Possibly there is always a space between such body and such chamber in which a tool can be inserted without damaging the adapter body.

Advantageously, the adapter body of this invention is always substantially centred inside the infusion chamber.

Advantageously, the adapter body of this invention exerts an elastic action without the need for additional components, for example springs, to ensure a light pre-compression of the aromatic substance upon closure of the infusion chamber.

To the embodiments of the above-mentioned assembly and adapter body, one skilled in the art, in order to meet specific needs, may make variants or substitutions of elements with others functionally equivalent.

Even these variants are contained within the scope of protection, as defined by the following claims.

Moreover, each of the variants described as belonging to a possible embodiment can be realized independently of the other variants described.

## Claims

1. A coffee-maker assembly (1) comprising:
- a coffee-maker comprising a boiler (2) for an infuser liquid, a beverage container (4) defining a collection chamber (6) for a beverage infused by means of said heated liquid, and an infusion funnel (8) defining part of an infusion chamber (14) suitable to house at least one pod (16) permeable to the infuser liquid and containing an aromatic substance (18) for the infused beverage;
wherein the beverage container (4) and the infusion funnel (8) comprise perforated walls (12, 42) for the passage of said liquid and said beverage;
- an adapter body (10) for said pod, made of elastomeric material, that identifies one or more internal passages (24) and a pair of contact perimeters (20, 26) that surround the perforations (22, 44) of said walls (12, 42) and that are spaced through the thickness of said body (10);
wherein a contact perimeter (20, 26) rests sealingly on a perforated wall (12, 42) so as to convey the infuser liquid or the infused beverage through the internal passage (24) or the plurality thereof; wherein the infusion funnel (8) comprises a substantially tubular wall (30), connected and developing from the perforated wall (12) to laterally delimit the infusion chamber (14), said assembly (1) being **characterized in that**, in front of said tubular wall, the adapter body (10) delimits spacer elements (46) to provide a free interspace (48) between body and wall (30).

2. Coffee-maker assembly according to claim 1, wherein the other contact perimeter (26, 20) of said body (10) is configured so as to form a hydraulic seal on the pod (16).

3. Coffee-maker assembly according to any of the preceding claims, wherein one or both contact perimeters (20, 26) have a surface hardness in the range of 40-70 ShoreA to create said seal on the perforated wall (12, 42) and to prevent damages of a permeable wall (28) of said pod (16).

4. Coffee-maker assembly according to any of the preceding claims, wherein each contact perimeter (20, 26) is suitable to create seals on the perforated walls (12, 42) and on the pod (16), so that the adapter body (10) is insertable between the beverage container (4) and the infusion funnel (8) in any direction, vertically above or below of said pod (16).

5. Coffee-maker assembly according to any of the preceding claims, wherein the spacer elements (46) are distributed around the adapter body (10) so as to constitute centring means of the adapter body (10) in the infusion chamber (14).

6. Coffee-maker assembly according to any of the preceding claims, wherein the spacer elements (46) comprise projections that extend outward from an external surface of the adapter body (10).

7. Coffee-maker assembly according to any of the preceding claims, wherein the adapter body (10) comprises a distribution plate (32), made in one piece with said elastomeric material and crossed by internal passages (24) that communicate - with respect to the direction of transit (T, T') of the infuser liquid or of the infused beverage - upstream with a lower chamber (34) and downstream with an upper chamber (36) of said body (10).

8. Coffee-maker assembly according to any of the preceding claims optionally when dependent on the preceding claim, wherein the adapter body (10), optionally the distribution plate (32), delimits internal passages (24) distributed with a density of about 2-20 passages/cm², preferably 4-10 passages/cm², said passages being substantially circular and of a diameter between 1-2,5 millimetres.

9. Coffee-maker assembly according to any of the preceding claims, wherein the adapter body (10) comprises a body wall (38) that extends annularly around a central axis (X), the contact perimeters (20, 26) being placed in correspondence to the axial ends of said wall (38).

10. Coffee-maker assembly according to any of the preceding claims, wherein, enclosed by at least one contact perimeter (20, 26), the adapter body (10) defines a secondary contact perimeter (40) suitable to partially wedge itself in the pod (16) to create a supplementary fluidic barrier between said body and said pod.

11. Coffee-maker assembly according to the preceding claim, wherein the secondary contact perimeter (40) is partially lowered or undercut with respect to the contact perimeter (20, 26) so that, when the latter is in abutment with the perforated wall (12, 42), the secondary contact perimeter (40) remains spaced from the wall in order not to prevent a transit of the infuser liquid or the infused beverage through said perforations (22, 44).

12. Coffee-maker assembly according to any of the preceding claims, wherein the thickness of the adapter body (10) is selected in such a way that, by virtue of the elasticity of said elastomeric material, said body (10) elastically works on the pod (16) and the perforated wall (12, 42) to partially compress the aromatic substance (18).

13. Coffee-maker assembly according to any of the preceding claims, wherein the elastomeric material comprises or consists of a silicone or a thermoplastic polymer.

## Patentansprüche

1. Eine Kaffeemaschinenanordnung (1), umfassend:
eine Kaffeemaschine, umfassend einen Kocher (2) für eine Brühflüssigkeit, einen Getränkebehälter (4), der eine Sammelkammer (6) für ein Getränk, das durch die erhitzte Flüssigkeit gebrüht wurde, bildet, und einen Brühtrichter (8), der einen Teil einer Brühkammer (14) bildet, der zur Aufnahme wenigstens einer Kapsel (16) geeignet ist, die für die Brühflüssigkeit durchlässig ist und die eine aromatische Substanz (18) für das Brühgetränk enthält,
wobei der Getränkebehälter (4) und der Brühtrichter (8) perforierte Wände (12, 42) für den Durchlass der Flüssigkeit und des Getränks umfassen;
- einen Adapterkörper (10) für die Kapsel, die aus einem Elastomerwerkstoff hergestellt ist, der einen oder mehrere Innendurchlässe (24) und ein Paar Kontaktränder (20, 26) bildet, die die Perforationen (22, 44) der Wände (12, 42) umgeben und die durch die Dicke des Körpers (10) voneinander beabstandet sind;
wobei ein Kontaktrand (20, 26) dichtend auf einer perforierten Wand (12, 42) derart liegt, dass die Brühflüssigkeit oder das Brühgetränk durch den Innendurchlass (24) oder die Mehrzahl derselben transportiert wird;
wobei der Brühtrichter (8)
eine im Wesentlichen rohrförmige Wand (30) umfasst, die mit der perforierten Wand (12) verbunden ist und sich von dieser erstreckt, um die Brühkammer (14) seitlich zu begrenzen, wobei die Anordnung (1) **dadurch gekennzeichnet ist,**
**dass** der Adapterkörper (10) vor der rohrförmigen Wand Abstandselemente (46) begrenzt, um einen freien Zwischenraum (48) zwischen dem Körper und der Wand (30) vorzusehen.

2. Kaffeemaschinenanordnung gemäß Anspruch 1, wobei der andere Kontaktrand (26, 20) des Körpers (10) derart ausgebildet ist, dass er eine hydraulische Dichtung an der Kapsel (16) bildet.

3. Kaffeemaschinenanordnung nach einem der vorangehenden Ansprüche, wobei einer oder beide Kontaktränder (20, 26) eine Oberflächenhärte in dem Bereich von 40 - 70 ShoreA aufweisen, um die Dichtung an der perforierten Wand (12, 42) zu bilden und Beschädigungen einer durchlässigen Wand (28) der Kapsel (16) zu verhindern.

4. Kaffeemaschinenanordnung nach einem der vorangehenden Ansprüche,
wobei jeder Kontaktrand (20, 26) geeignet ist, Dichtungen an den perforierten Wänden (12, 42) und an der Kapsel (16) zu bilden, so dass der Adapterkörper (10) zwischen dem Getränkebehälter (4) und dem Brühtrichter (8) in jeglicher Richtung, vertikal oberhalb oder unterhalb der Kapsel (16), einführbar ist.

5. Kaffeemaschinenanordnung nach einem der vorangehenden Ansprüche,
wobei die Abstandselemente (46) um den Adapterkörper (10) herum derart verteilt sind, dass sie Zentriermittel für den Adapterkörper (10) in der Brühkammer (14) bilden.

6. Kaffeemaschinenanordnung nach einem der vorangehenden Ansprüche, wobei die Abstandselemente (46) Vorsprünge umfassen, die sich von einer Außenfläche des Adapterkörpers (10) nach außen erstrecken.

7. Kaffeemaschinenanordnung nach einem der vorangehenden Ansprüche, wobei der Adapterkörper (10) eine Verteilerplatte (32) umfasst, die mit dem Elastomerwerkstoff einstückig ausgebildet ist und von Innendurchlässen (24) gekreuzt wird, die - bezüglich der Förderrichtung (T, T') der Brühflüssigkeit oder des Brühgetränks - mit einer unteren Kammer (34) stromaufwärts und mit einer oberen Kammer (36) des Körpers (10) stromabwärts verbunden sind.

8. Kaffeemaschinenanordnung nach einem der vorangehenden Ansprüche, wahlweise, wenn von dem vorangehenden Anspruch abhängig, der Adapterkörper (10), wahlweise die Verteilerplatte (32), Innendurchlässe (24) begrenzen, die mit einer Dichte von ungefähr 2 - 20 Durchlässe/cm², vorzugsweise 4 - 10 Durchlässe/cm² verteilt sind, wobei die Durchlässe im Wesentlichen kreisförmig sind und einen Durchmesser zwischen 1 - 2,5 Millimetern aufweisen.

9. Kaffeemaschinenanordnung nach einem der vorangehenden Ansprüche, wobei der Adapterkörper (10) eine Körperwand (38) umfasst, die sich ringförmig um eine Mittelachse (X) erstreckt, wobei die Kontaktränder (20, 26) entsprechend den axialen Enden der Wand (38) angeordnet sind.

10. Kaffeemaschinenanordnung nach einem der vorangehenden Ansprüche, wobei, falls der Adapterkörper (10) von wenigstens einem Kontaktrand (20, 26) umschlossen ist, er einen zweiten Kontaktrand (40) bildet, der geeignet ist, sich teilweise selbstständig in der Kapsel (16) zu verkeilen, um eine zusätzliche Flüssigkeitsbarriere zwischen dem Körper und der Kapsel zu bilden.

11. Kaffeemaschinenanordnung nach einem der vorangehenden Ansprüche, wobei der zweite Kontaktrand (40) teilweise verringert oder bezüglich des Kontaktrands (20, 26) hinterschnitten ausgebildet ist, so dass, wenn der Kontaktrand (20, 26) gegen die perforierte Wand (12, 42) anliegt, der zweite Kontaktrand (40) von der Wand beabstandet bleibt, um nicht einen Durchtritt der Brühflüssigkeit oder des Brühgetränks durch die Perforationen (22, 44) zu verhindern.

12. Kaffeemaschinenanordnung nach einem der vorangehenden Ansprüche, wobei die Dicke des Adapterkörpers (10) derart gewählt ist, dass aufgrund der Elastizität des Elastomerwerkstoffs der Körper (10) die Kapsel (16) und die perforierte Wand (12, 42) elastisch verformt, um die aromatische Substanz (18) teilweise zusammenzudrücken.

13. Kaffeemaschinenanordnung nach einem der vorangehenden Ansprüche, wobei der Elastomerwerkstoff einen Silikonwerkstoff oder einen thermoplastischen Kunststoff umfasst.

## Revendications

1. Ensemble cafetière (1) comprenant :
- une cafetière comprenant un compartiment d'ébullition (2) pour un liquide d'infusion, un récipient à boisson (4) définissant une chambre de collecte (6) pour une boisson infusée au moyen dudit liquide chauffé, et un entonnoir d'infusion (8) définissant une partie d'une chambre d'infusion (14) appropriée pour recevoir au moins une dosette (16) perméable au liquide d'infusion et contenant une substance aromatique (18) pour la boisson infusée ;
dans lequel le récipient à boisson (4) et l'entonnoir d'infusion (8) comprennent des parois perforées (12, 42) pour le passage dudit liquide et de ladite boisson ;
- un corps d'adaptateur (10) pour ladite dosette, constitué de matériau élastomère, qui définit un ou plusieurs passages internes (24) et une paire de périmètres de contact (20, 26) qui entourent les perforations (22, 44) desdites parois (12, 42) et qui sont espacés à travers l'épaisseur dudit corps (10) ;
dans lequel un périmètre de contact (20, 26) repose de manière étanche sur une paroi perforée (12, 42) de manière à acheminer le liquide d'infusion ou la boisson infusée à travers le passage interne (24) ou la pluralité de ceux-ci ;
dans lequel l'entonnoir d'infusion (8) comprend une paroi sensiblement tubulaire (30), raccordée et se développant à partir de la paroi perforée (12) pour délimiter latéralement la chambre d'infusion (14), ledit ensemble (1) étant **caractérisé en ce que**, à l'avant de ladite paroi tubulaire, le corps d'adaptateur (10) délimite des éléments d'espacement (46) pour fournir un espace intermédiaire libre (48) entre le corps et la paroi (30).

2. Ensemble cafetière selon la revendication 1, dans lequel l'autre périmètre de contact (26, 20) dudit corps (10) est configuré de manière à former un joint d'étanchéité hydraulique sur la dosette (16).

3. Ensemble cafetière selon l'une quelconque des revendications précédentes, dans lequel un ou les deux périmètres de contact (20, 26) ont une dureté de surface dans la plage de 40 à 70 ShoreA pour créer ledit joint d'étanchéité sur la paroi perforée (12, 42) et pour empêcher l'endommagement d'une paroi perméable (28) de ladite dosette (16).

4. Ensemble cafetière selon l'une quelconque des revendications précédentes, dans lequel chaque périmètre de contact (20, 26) est approprié pour créer des joints d'étanchéité sur les parois perforées (12, 42) et sur la dosette (16), de telle sorte que le corps d'adaptateur (10) peut être inséré entre le récipient à boisson (4) et l'entonnoir d'infusion (8) dans n'importe quelle direction, verticalement au-dessus ou au-dessous de ladite dosette (16).

5. Ensemble cafetière selon l'une quelconque des revendications précédentes, dans lequel les éléments d'espacement (46) sont répartis autour du corps d'adaptateur (10) de manière à constituer des moyens de centrage du corps d'adaptateur (10) dans la chambre d'infusion (14).

6. Ensemble cafetière selon l'une quelconque des revendications précédentes, dans lequel les éléments d'espacement (46) comprennent des saillies qui s'étendent vers l'extérieur à partir d'une surface externe du corps d'adaptateur (10).

7. Ensemble cafetière selon l'une quelconque des revendications précédentes, dans lequel le corps d'adaptateur (10) comprend une plaque de distribution (32), réalisée d'un seul tenant avec ledit matériau élastomère et traversée par des passages internes (24) qui communiquent - par rapport à la direction de passage (T, T') du liquide d'infusion ou de la boisson infusée - en amont avec une chambre inférieure (34) et en aval avec une chambre supérieure (36) dudit corps (10).

8. Ensemble cafetière selon l'une quelconque des revendications précédentes facultativement lorsque prise en dépendance de la revendication précédente, dans lequel le corps d'adaptateur (10), facultativement la plaque de distribution (32), délimite des passages internes (24) répartis avec une densité d'environ 2 à 20 passages/cm², de préférence de 4 à 10 passages/cm², lesdits passages étant sensiblement circulaires et d'un diamètre entre 1 et 2,5 millimètres.

9. Ensemble cafetière selon l'une quelconque des revendications précédentes, dans lequel le corps d'adaptateur (10) comprend une paroi de corps (38) qui s'étend de manière annulaire autour d'un axe central (X), les périmètres de contact (20, 26) étant placés en correspondance avec les extrémités axiales de ladite paroi (38).

10. Ensemble cafetière selon l'une quelconque des revendications précédentes, dans lequel, entouré par au moins un périmètre de contact (20, 26), le corps d'adaptateur (10) définit un périmètre de contact secondaire (40) approprié pour se caler partiellement dans la dosette (16) pour créer une barrière fluidique supplémentaire entre ledit corps et ladite dosette.

11. Ensemble cafetière selon la revendication précédente, dans lequel le périmètre de contact secondaire (40) est partiellement diminué ou en dégagement par rapport au périmètre de contact (20, 26) de telle sorte que, lorsque ce dernier est en butée contre la paroi perforée (12, 42), le périmètre de contact secondaire (40) reste espacé de la paroi afin de ne pas empêcher un passage du liquide d'infusion ou de la boisson infusée à travers lesdites perforations (22, 44).

12. Ensemble cafetière selon l'une quelconque des revendications précédentes, dans lequel l'épaisseur du corps d'adaptateur (10) est sélectionnée d'une manière telle que, grâce à l'élasticité dudit matériau élastomère, ledit corps (10) travaille de manière élastique sur la dosette (16) et la paroi perforée (12, 42) pour comprimer partiellement la substance aromatique (18).

13. Ensemble cafetière selon l'une quelconque des revendications précédentes, dans lequel le matériau élastomère comprend ou est constitué d'un silicone ou d'un polymère thermoplastique.
